# EUROPÄISCHE PATENTANMELDUNG

(11) **EP 2 474 462 A2**
(43) Veröffentlichungstag der Anmeldung: **11.07.2012**
(21) Anmeldenummer: 12150303.1
(22) Anmeldetag: 05.01.2012
(51) Int. Cl.: B62J 7/08

(54) **Befestigungsvorrichtung mit elastischen Bändern und an dessen Enden angebrachten Befestigungselementen**

(30) Priorität: 05.01.2011 DE 202011000018 U; 05.01.2011 CH 212011
(71) Anmelder: Hubert, Uli, 6300 Zug (CH)
(72) Erfinder: Hubert, Uli, 6300 Zug (CH)
(74) Vertreter: OK pat AG

(57) **Zusammenfassung**

Es wird eine Befestigungsvorrichtung (100; 200; 300; 400) bereitgestellt, die ein elastisches Längsband (110; 210; 310; 410) mit einem ersten Ende (120; 220; 320; 420) und einem zweiten Ende (130; 230; 330; 430), einem an dem ersten bzw. zweiten Ende befestigten, ersten bzw. zweiten Befestigungselement (140, 150; 240, 250; 340, 350; 440, 450), das dazu ausgebildet ist, das erste und das zweite Ende an oder auf einem Tuch (500) lösbar zu befestigen. An dem Längsband sind ein, zwei oder mehr elastische Querbänder (160; 260; 360; 460) so befestigt, dass diese sich in einem ausgebreiteten Zustand der Befestigungsvorrichtung in einer zu einer Erstreckungsrichtung (112; 212; 312) des Längsbandes im Wesentlichen senkrechten und zueinander im Wesentlichen identischen Richtung (162; 262; 362) erstrecken, und an einem freien Ende (170; 270; 370; 470) von jedem Querband ist ein Befestigungselement (180; 280; 380; 480) befestigt, das dazu ausgebildet ist, das erste und das zweite Ende (120, 130; 220, 230; 320, 330; 420, 430) an oder auf dem Tuch (500) lösbar zu befestigen. Das Längsband und jedes Querband kann aus einem im Wesentlichen identischen, elastischen Bandmaterial hergestellt sein.

## Beschreibung

Die vorliegende Erfindung betrifft eine Befestigungsvorrichtung gemäß dem Oberbegriff des Anspruchs 1 und umfasst ein elastisches Längsband mit einem ersten und einem zweiten Ende, ein an dem ersten Ende befestigtes, erstes Befestigungselement sowie ein an dem zweiten Ende befestigtes, zweites Befestigungselement, wobei das erste und das zweite Befestigungselement dazu ausgebildet sind, das erste und das zweite Ende an oder auf einem Tuch lösbar zu befestigen.

Eine derartige Befestigungsvorrichtung ist an sich bekannt. Ein erstes Beispiel ist ein einfacher, so genannter Expander zum lösbaren Festhalten von Taschen auf einem Gepäckträger eines Fahrrads. Der Expander besteht aus einem elastischen Band, an dessen beiden Enden Haken, etwa J-förmige Haken, befestigt sind. Die Haken dienen zum lösbaren Einhängen bzw. Festsetzen des jeweiligen Endes etwa an einer Rahmenstange des Fahrrads oder an einer Strebe des Gepäckträgers. Ein zweites Beispiel ist in der Herrenbekleidung im Zusammenhang mit einem klassischen Hosenträger bekannt. Der Hosenträger umfasst zwei im Wesentlichen identische Befestigungsvorrichtungen mit je einem elastischen Längsband, an dessen beiden Enden jeweils eine Klemmeinrichtung zum lösbaren Festklemmen an einem Hosenbund vorgesehen ist. In einem an einem Oberkörper einer Person getragen Zustand verläuft ein jeweiliges Längsband über eine jeweilige Schulter der Person und die an der Bauch- bzw. Rückenseite am Ende des Längsbandes befestigte Klemmeinrichtung wird an einem bauch- bzw. rückenseitigen Haltepunkt eines Hosenbundes der Hose festgeklemmt. Die beiden Längsbänder sind durch ein Querelement in einem vorbestimmten Abstand miteinander verbunden. Das Querelement befindet sich in einem getragenen Zustand des Hosenträgers etwa im Lendenwirbelbereich der Person.

Aufgabe der Erfindung ist es, eine Befestigungsvorrichtung bereit zu stellen, die ein anderes Befestigungsproblem löst, nämlich ein Tuch, etwa ein Handtuch, an der Ober- bzw. Vorderseite eines sich schräg oder nahezu senkrecht erstreckenden Lehnenelement eines Liegestuhls bzw. einer Sonnenliege zuverlässig zu befestigen und dabei von der Ober- bzw. Vorderseite des Lehnenelements her gesehen nicht sichtbar zu sein.

Gemäß der Erfindung wird die Aufgabe gelöst durch eine Befestigungsvorrichtung mit einem elastischen Längsband mit einem ersten Ende und einem zweiten Ende, einem an dem ersten Ende befestigten, ersten Befestigungselement, und einem an dem zweiten Ende befestigten, zweiten Befestigungselement, wobei das erste und das zweite Befestigungselement dazu ausgebildet sind, das erste und das zweite Ende an oder auf einem Tuch lösbar zu befestigen.

Erfindungsgemäß umfasst die Befestigungsvorrichtung ein, zwei oder mehr elastische Querbänder, die an dem Längsband so befestigt sind, dass die Querbänder sich in einem ausgebreiteten Zustand der Befestigungsvorrichtung in einer zu einer Erstreckungsrichtung des Längsbandes im Wesentlichen senkrechten und zueinander im Wesentlichen identischen Richtung erstrecken, und ein, zwei oder mehrere an einem freien Ende jedes Querbands vorgesehene Befestigungselemente, die dazu ausgebildet sind, das freie Ende an oder auf dem Tuch lösbar zu befestigen.

Das Tuch kann aus einem tuch- bzw. stoffartigen Material hergestellt sein. Das Tuch kann ein Handtuch, ein Strandlaken, ein Spannbetttuch, ein Wickeltuch zum Umwickeln eines menschlichen Körpers, ein Abdecktuch zum Abdecken von abgelegten Strand- oder Badeutensilien oder eine Plane zum Abdecken eines Kraftfahrzeugs, insbesondere der Fenster einer Passagierkabine eines Personenkraftwagens, sein.

Das Längsband und jedes Querband kann aus einem im Wesentlichen identischen, elastischen Bandmaterial hergestellt sein. Insbesondere kann das Bandmaterial ein Gummiband oder ein textilartiges Band, also ein spannbares Band, sein.

Das erste und das zweite Befestigungselement und jedes am freien Ende eines Querbandes befestigte Befestigungselement kann in einer im Wesentlichen identischen Weise an den jeweiligen Enden der Bänder befestigt sein. Insbesondere kann dabei jedes Befestigungselement an dem jeweiligen Ende der Bänder angenäht, angenietet, angeklebt oder in einer durch Umschlagen des Endes des Bandes gebildeten Bandöse eingehängt sein.

Das erste und das zweite Befestigungselement und jedes an einem freien Ende eines Querbandes befestigte Befestigungselement können funktionsgleich, z.B. baugleich oder im Wesentlichen identisch zueinander, ausgebildet sein.

Ein Befestigungselement kann ein oder mehrere Elemente der folgenden Gruppe umfassen: einen Schnappverschluss, einen Haken, ein Klettelement mit einer Vielzahl von Haken- und/oder Ösen-Elementen, eine oder mehrere Krallen oder eine Kombination dieser Elemente.

Die Befestigungsvorrichtung kann auch eine daran lösbar befestigbare Utensilientasche umfassen. Die Utensilientasche kann in ihrem an der Befestigungsvorrichtung befestigten Zustand in einer Längsrichtung des Längsbands verschiebbar sein. Alternativ dazu kann die Utensilientasche auch am Längsband fixiert, d.h. nicht verschiebbar am Längsband angebracht sein.

Die Utensilientasche kann als Hardcase ausgebildet sein. In dieser Ausführung gewährt die Utensilientasche darin eingelegten Utensilien, etwa einer Brille oder einer Sonnenbrille, Schutz vor einem Verbiegen oder Zerbrechen aufgrund auf der Utensilientasche von außen einwirkender Kräfte.

Die Utensilientasche kann aus einem flexiblen bzw. tuchartigen Material ausgebildet sein.

Die Utensilientasche kann als ein im Wesentlichen rechteckförmiger oder quadratförmiger Beutel ausgebildet sein, von dem drei Seiten geschlossen sind und die eine verbleibende Seite mittels eines Längsverschlusses verschlossen und geöffnet werden kann. Der Längsverschluss kann ein Reißverschluss oder ein Gleitverschluss sein.

Alternativ dazu kann die Utensilientasche als eine im Wesentlichen rechteckförmige oder quadratförmige, aufklappbare Tasche ausgebildet sein, die über eine Seite aufklappbar ist und die entlang der drei übrigen Seiten mittels eines Längsverschlusses verschlossen und geöffnet werden kann. Auch hierbei kann der Längsverschluss ein Reißverschluss oder ein Gleitverschluss sein.

Noch alternativ dazu kann die Utensilientasche als eine Brillentasche ausgebildet sein und etwa zum Aufbewahren von einer (z.B. einer Sonnenbrille) oder mehreren (z.B. einer Sonnenbrille und einer Lesebrille) Brillen dienen. Dabei kann die Utensilientasche (Brillentasche) als wiederum als Hardcase oder aus einem flexiblen bzw. tuchartigen Material, etwa aus einem Microfaser-Material ausgebildet sein. In der Ausführung aus flexiblem bzw. tuchartigem Material hat die Brillentasche eine Reinigungsfunktion, etwa für eine Brille, die darin eingelegt oder mit dem Material händisch gereinigt wird.

Die Utensilientasche kann ferner eines oder mehrere der folgenden Elemente aufweisen: eine an einer Außenseite der Utensilientasche angebrachte Seitentasche, eine an einer Innenseite der Utensilientasche angeordnete Innentasche und ein an einer Innenseite der Utensilientasche befestigtbares Innenraumunterteilungselement.

Die Befestigungsvorrichtung kann für eine oder mehrere der folgenden Verwendungen (i) bis (vi) ausgebildet sein:
(i) die Befestigungsvorrichtung dient zum Befestigen eines Tuches, beispielsweise eines Handtuches, an einem klappbaren Lehnenelement einer Sonnenliege oder eines Liegestuhls,
(ii) die Befestigungsvorrichtung, insbesondere deren Befestigungselemente, dienen zum Befestigen an einer rückseitigen Fläche eines Lehnenelements,
(iii) die Befestigungsvorrichtung, insbesondere deren Befestigungselemente, dienen zum Befestigen an einem Rucksack;
(iv) die Befestigungsvorrichtung, insbesondere deren Befestigungselemente, dienen zum Befestigen an einem Hosenbund, wobei das Längsband im Wesentlichen parallel zu dem Hosenbund angeordnet ist;
(v) die Befestigungsvorrichtung dient als Werbematerial;
(vi) die Befestigungsvorrichtung dient zum Zusammenhalten eines zusammengerollten Tuchs.

In der Verwendung (i) können Randstreifen eines zumindest Teilbereichs der Vorder- bzw. Oberseite des Lehnenelements abdeckenden Tuchs um jeweilige Randbereiche des Lehnenelements herum geschlagen sein, so dass die umgeschlagenen Randstreifen zumindest entsprechende Randbereiche einer Rückseite des Lehnenelements überdecken und die umgeschlagenen Randstreifen auf der Rückseite des Lehnenelements mittels des ersten und des zweiten Befestigungselements und jedes an einem freien Ende eines Querbandes befestigte Befestigungselement lösbar gehalten werden.

In der Verwendung (ii) kann die rückseitige Fläche mit einem textil- bzw. tuchartigen Überzug überzogen sein. Das Lehnenelement kann eine Autositzlehne sein.

In der Verwendung (v) kann die Befestigungsvorrichtung als Werbematerial für Reiseveranstalter, Hotels oder Hotelketten, oder zum Verkauf auf Booten oder Kreuzfahrtschiffen, oder zum Verkauf durch Strand-, Schwimmbad- oder Seebadeanstaltbetreiber und/oder zur privaten Nutzung vorgesehen sein.

In der Verwendung (vi) kann mindestens eines der Querbänder um das zusammengerollte Tuch herum gespannt sein. Es können auch zwei oder mehr Querbänder um das zusammengerollte Tuch herum gespannt sein.

Weitere Details sind den beigefügten, beispielhaften Zeichnungen zu entnehmen, für die gilt:

Fig. 1 zeigt eine erste Ausführungsform einer erfindungsgemäßen Befestigungsvorrichtung in einem ausgebreiteten Zustand.

Fig. 2 zeigt eine zweite Ausführungsform einer erfindungsgemäßen Befestigungsvorrichtung in einem ausgebreiteten Zustand.

Fig. 3 zeigt eine Verwendung der Befestigungsvorrichtung gemäß der ersten Ausführungsform aus der Fig. 1.

Fig. 4 zeigt eine dritte Ausführungsform einer erfindungsgemäßen Befestigungsvorrichtung in einem ausgebreiteten Zustand.

Fig. 5a zeigt eine erste Verwendung der Befestigungsvorrichtung gemäß der dritten Ausführungsform aus der Fig. 4. Fig. 5b zeigt eine zur ersten zusätzliche Verwendung der Befestigungsvorrichtung. Fig. 5c zeigt eine zweite Verwendung der Befestigungsvorrichtung gemäß der dritten Ausführungsform aus der Fig. 4.

Fig. 6a zeigt eine vierte Ausführungsform einer erfindungsgemäßen Befestigungsvorrichtung in einem ausgebreiteten Zustand, von einer äußeren Seite aus gesehen. Fig. 6b zeigt die vierte Ausführungsform im ausgebreiteten Zustand, von einer inneren Seite aus gesehen. Fig. 6c zeigt die vierte Ausführungsform im ausgebreiteten Zustand von der inneren Seite aus gesehen, wobei der zusammenfaltbare Beutel auseinandergefaltet ist.

Fig. 7a zeigt eine erste Verwendung der Befestigungsvorrichtung gemäß der vierten Ausführungsform aus den Figuren 6a bis 6c. Fig. 7b zeigt eine zweite Verwendung der Befestigungsvorrichtung gemäß der vierten Ausführungsform aus den Figuren 6a bis 6c mit geöffnetem Beutel.

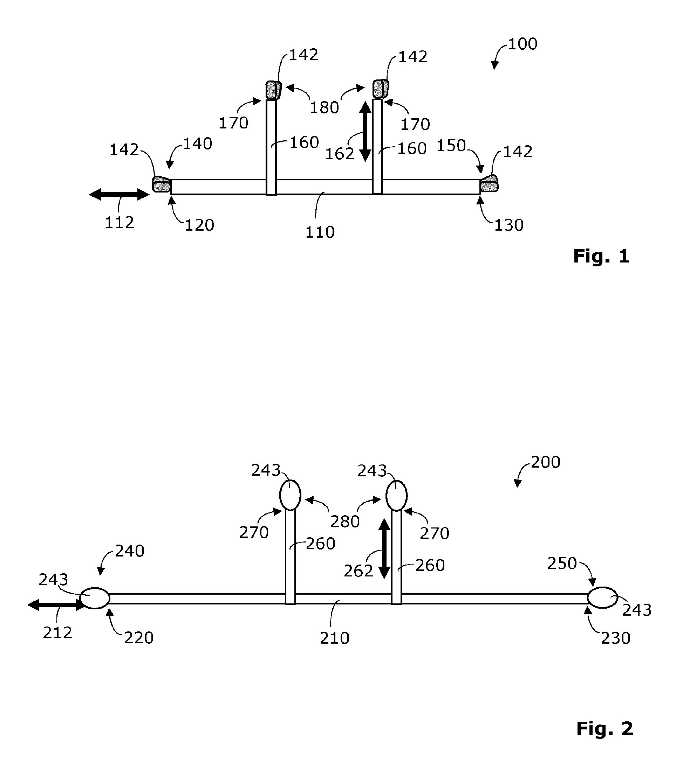

Eine erste Ausführungsform einer erfindungsgemäßen Befestigungsvorrichtung 100 wird im Folgenden unter Bezugnahme auf die Fig. 1 beschrieben. Die Befestigungsvorrichtung 100 ist in Fig. 1 in einem ausgebreiteten Zustand gezeigt und umfasst ein Längsband 110 mit einem ersten Ende 120 und einem zweiten Ende 130, ein Querband 160 mit einem freien Ende 170, ein an dem ersten Ende 120 des Längsbands 110 angebrachtes, erstes Befestigungselement 140, ein an dem zweiten Ende 130 des Längsbands 110 angebrachtes, zweites Befestigungselement 150 und ein an dem freien Ende 170 des Querbands 160 angebrachtes Befestigungselement 180. Im ausgebreiteten Zustand erstreckt sich das Längsband 110 in einer in Fig. 1 angedeuteten Erstreckungsrichtung 112 (Längsrichtung der Befestigungsvorrichtung 100) und das Querband 160 erstreckt sich in einer zu der Erstreckungsrichtung 112 des Längsbands 110 senkrechten Richtung 162. Optional umfasst die Befestigungsvorrichtung 100 ein zweites Querband 160, das im wesentlichen identisch ausgebildet ist wie das erste Querband 160, das an seinem freien Ende 170 ebenfalls ein Befestigungselement 180 aufweist, und das sich im ausgebreiteten Zustand der Befestigungsvorrichtung 100 im wesentlichen parallel zum ersten Querband 160 erstreckt.

Das erste und zweite Querband 160 sind an ihren, dem jeweiligen freien Ende 170 gegenüberliegenden, nicht-freien Ende an dem Längsband 110 befestigt. Dabei sind die Querbänder 160 so befestigt, dass sie in dem ausgebreiteten Zustand der Befestigungsvorrichtung 100 im wesentlichen parallel zueinander und mit einem vorbestimmten Abstand in der Erstreckungsrichtung 112 zueinander beabstandet angeordnet sind.

Das erste und das zweite Befestigungselement 140 und 150 an dem jeweiligen ersten und zweiten Ende 120 und 130 des Längsbands 110 und die Befestigungselemente 180 an den freien Enden 170 der Querbänder 160 sind dazu ausgelegt bzw. dienen dazu, die jeweiligen freien Enden an einem nicht zu der Befestigungsvorrichtung 100 gehörenden Gegenstand (in Fig. 1 nicht gezeigt) zu befestigen. Die Befestigungselemente 140, 150 und 180 können dazu ausgebildet sein, das jeweilige freie Ende an einem Tuch, insbesondere am Rand eines Tuchs, das aus einem tuch- bzw. stoffartigen Material hergestellt sein kann, lösbar zu befestigen. Das kann dadurch erreicht werden, dass ein jeweiliges Befestigungselement 140, 150, 180 einen Teil des Tuchs in dem Befestigungselement lösbar festklemmt, sich lösbar in dem Tuch einhakt, mittels eines so genannten Klettverschlusses oder eines so genannten Druckknopfes an einem entsprechenden Gegenstück zu dem Klettelement oder Druckknopf lösbar anhaftet.

Die Befestigungselemente 140, 150 und 180 können, müssen jedoch nicht, im Wesentlichen baugleich zueinander sein. Sie können auch zueinander funktionell baugleich, jedoch in ihrer Größe verschieden ausgebildet sein. Insbesondere kann jedes Befestigungselement 140, 150 und 180 baugleich als Schnappverschlusselement 142 ausgeführt sein, etwa wie die an Enden eines Hosenträgers zum Befestigen an einem Hosenbund angeordneten, bekannten Schnappverschlusselemente. Dazu umfasst ein jeweiliges Schnappverschlusselement 142 eine erste Klemmbacke und eine in Bezug zu der ersten Klemmbacke schwenkbar angeordnete zweite Klemmbacke (wie in Fig. 1 angedeutet) und ein Feststellelement (in Fig. 1 nicht gezeigt) zum lösbaren Fixieren einer relativen Schwenkposition der Klemmbacken relativ zueinander. Die Klemmbacken können in einer Position, in der ein zwischen der ersten und zweiten Klemmbacke eingelegtes Tuch von den Klemmbacken lösbar festgehalten bzw. festgeklemmt wird.

Das Längsband 110 und ein jeweiliges der Querbänder 160 können aus einem Gewebe hergestellt sein. Sie können aus einem nicht dehnbaren, vorzugsweise jedoch aus einem elastischen, insbesondere spannbaren Material hergestellt sein, etwa aus einem stoffartigen Material mit darin eingewebten, elastischen Bändern bzw. Fäden.

Bei der in Fig. 2 gezeigten zweiten Ausführungsform umfasst eine erfindungsgemäße Befestigungsvorrichtung 200 ein sich in seiner Erstreckungsrichtung 210 erstreckendes Längsband 210 mit einem ersten Ende 220 und einem zweiten Ende 230, ein an dem ersten Ende 220 vorgesehenes, erstes Befestigungselement 240 mit einer ersten Abdeckung, ein an dem zweiten Ende 230 vorgesehenes, zweites Befestigungselement 250 mit einer zweiten Abdeckung, ein erstes und ein zweites Querband 260, die jeweils mit ihrem einen Ende an dem Längsband 210 befestigt sind und an ihren anderen, freien Enden 270 jeweils ein Befestigungselement 280 mit einer zugehörigen Abdeckungen aufweisen.

Die an den jeweiligen Enden 120, 220, 130, 230 und 170, 270 vorgesehenen Befestigungselemente 140, 240, 150, 250 und 180, 280 können, in der in Fig. 2 gezeigten zweiten Ausführungsform ebenso wie in der in Fig. 1 gezeigten ersten Ausführungsform, voneinander verschieden oder im wesentlichen funktionsgleich, etwa baugleich oder funktionell in gleicher Weise und insbesondere als ein Schnappverschlusselement 142 (wie das bezüglich Fig. 1 beschriebene) ausgestaltet sein.

Die in Fig. 2 gezeigte Befestigungsvorrichtung 200 unterscheidet sich von der in Fig. 1 gezeigten Befestigungsvorrichtung 100 durch die an den Enden 220, 230 und 270 zusätzlich vorgesehenen Abdeckungen, die jeweils in gleicher Weise als Abdeckung 243 ausgeführt sein können, wie in Fig. 2 gezeigt. Die Abdeckungen bzw. Abdeckungen 243 dienen als Sichtabdeckung zum Verdecken der Sicht auf das jeweilige, darunter angeordnete Befestigungselement 240, 250, 280. Dementsprechend sind in Fig. 2 die an den jeweiligen Enden der Bänder 210, 260 angebrachten Befestigungselemente 240, 250, 280 nicht sichtbar unter den jeweiligen Abdeckungen 243 verborgen dargestellt.

Eine jeweilige Abdeckung 243 kann oval, kreisförmig, elliptisch, rechteckförmig oder quadratförmig oder in einer beliebigen anderen Form ausgebildet sein. Die Form kann so gestaltet sein, dass die Abdeckung 243 einen hohen Wiedererkennungswert aufweist. Beispielsweise kann die Abdeckung 243 in der Form eines Markenzeichens ausgebildet sein. Alternativ dazu kann die Abdeckung auch eine andere individualisierte bzw. personalisierte Form aufweisen, so dass durch die Form der Abdeckung eine bestimmte Herkunft oder Bezugsquelle der Befestigungsvorrichtung 200 angedeutet wird. Die Form der Abdeckung kann auch nach dekorativen Gesichtspunkten ausgestaltet werden, beispielsweise kann die Abdeckung 243 die Form einer Ausrichtung ihrer Oberseite gesehenen, flachen oder zugreifenden Hand ausgestaltet sein.

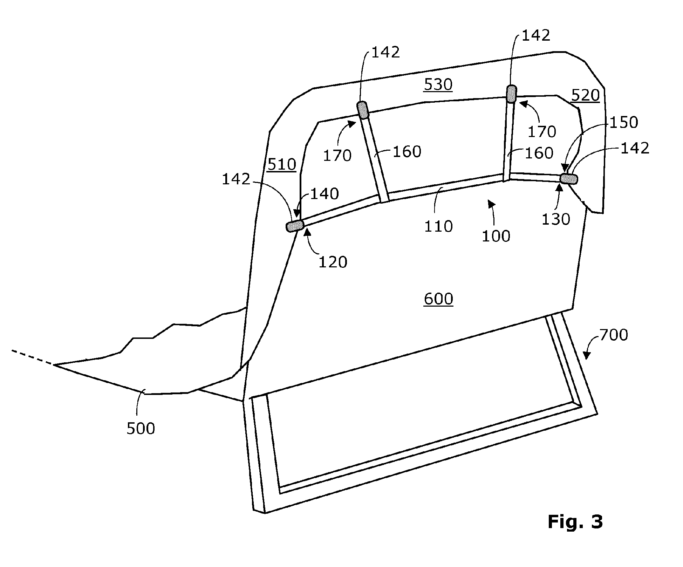

Wie in Fig. 3 gezeigt, kann eine Befestigungsvorrichtung 100 gemäß der in Fig. 1 gezeigten ersten Ausführungsform dazu verwendet werden, ein Tuch 500, etwa ein Handtuch oder ein Strandlaken, an einer Rückenlehne bzw. einem Lehnenelement 600 einer Sitz- oder Liegeeinrichtung, etwa von einer Strandliege oder einem Sonnenstuhl, zu befestigen. Dabei ist das Lehnenelement 600 an einer Seite schwenkbar an einer Auflagefläche der Sitz- oder Liegeeinrichtung, z.B. scharnierend, befestigt. Die Sitz- oder Liegeeinrichtung weist ein Gestell 700 auf, mit dem die Auflagefläche der Sitz- oder Liegeeinrichtung in einer bestimmten Höhe über einem Boden getragen wird.

Bei der in Fig. 3 gezeigten Verwendung der Befestigungsvorrichtung 100 ist ein Tuch 500 zumindest auf einer Ober- bzw. Vorderseite des Lehnenelements 600 aufgelegt und sind Randbereiche des Tuchs (die in Fig. 3 gezeigten Tuchstreifen 510, 520 und 530) um entsprechende Ränder des Lehnenelements 600 auf die Rück- bzw. Unterseite des Lehnenelements 600 herumgeschlagen. Die herumgeschlagenen Tuchstreifen 510, 520 und 530 werden durch die Befestigungselemente 142 an den freien Enden der Bänder 110, 160 der Befestigungsvorrichtung 100 an der Rück- bzw. Unterseite des Lehnenelements 600 festgehalten und dadurch der übrige Bereich des Tuchs 500 an der Vorder- bzw. Oberseite des Rückenelements 600 fixiert bzw. gespannt.

Das in Fig. 3 gezeigte Tuch 500 kann ein Handtuch oder ein Strandlaken mit einer Längsrichtung und einer Querrichtung sein. Das Tuch 500 kann mit seiner Querrichtung im Wesentlichen parallel zu einer Breitseite des Lehnenelements 600 auf dessen Vorder- bzw. Oberseite aufgelegt sein. Dabei können ein erster umgeschlagener Tuchstreifen 510 und ein zweiter umgeschlagener Tuchstreifen 520 jeweils entlang der Längsrichtung des Tuchs 500 um einander gegenüberliegende Ränder des Lehnenelements 600 und ein den ersten und zweiten Tuchstreifen miteinander verbindender, dritter Tuchstreifen 530 entlang einer Querrichtung des Tuchs 500 um die Breitseite des Lehnenelements 600 herumgeschlagen sein. Selbstverständlich und wie in Fig. 3 nicht gezeigt, kann das Tuch 500 auch mit seiner Längsrichtung parallel zu der Breitseite des Lehnenelements 600 aufgelegt werden, wobei dann der erste und zweite Tuchstreifen 510 und 520 entlang der Querrichtung und der dritte Tuchstreifen 530 entlang der Längsrichtung des Tuchs verlaufen.

Die Befestigungsvorrichtung 100 wird nun, wie in Fig. 3 gezeigt, wie folgt verwendet: Das Längsband 110 wird zwischen den Tuchstreifen 510 und 520 gespannt, die am ersten Ende 120 des Längsbandes 110 befestigte, erste Befestigungselement 140 (Schnappverschlusselement 142) wird am ersten Tuchstreifen 510 und das am zweiten Ende 130 des Längsbandes 110 befestigte zweite Befestigungselement 150 (142) wird am zweiten Tuchstreifen 520 lösbar befestigt. Schließlich werden die Querstreifen 160 zwischen dem gespannten Längsband 110 und dem Tuchstreifen 530 gespannt und mittels der an ihren freien Enden 170 angeordneten Befestigungselementen 180 (142) an dem Tuchstreifen 530 lösbar befestigt.

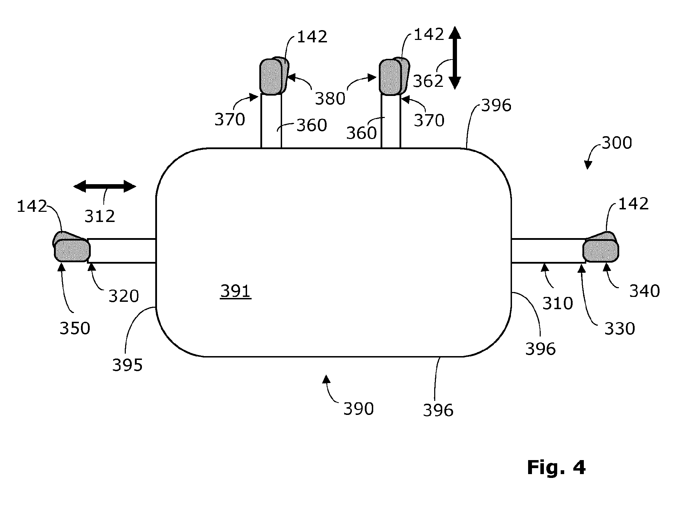

In der in Fig. 4 gezeigten dritten Ausführungsform umfasst die erfindungsgemäßen Befestigungsvorrichtung 300 ein Längsband 310 mit an dessen entgegengesetzten Enden (erstes und zweites Ende 320 und 330) befestigten Befestigungselementen 340, 350 (142) und zwei an dem Längsband 310 befestigten Querbändern 360, die an ihren jeweiligen freien Enden jeweils ein Befestigungselement 380 (142) aufweisen. Die Befestigungselemente 340, 350 und 380 können funktionsgleich bzw. baugleich zueinander und als Schnappverschlusselement 142 (siehe Fig. 1) ausgebildet sein. Die den Elementen der in Fig. 1 gezeigten Ausführungsform (Befestigungsvorrichtung 100) entsprechenden Elemente der Befestigungsvorrichtung 300 sind mit Bezugszeichen versehen, die an ihrer Hunderterstelle eine "3" (entsprechend der dritten Ausführungsform) und an ihren Zehner- bzw. Einerstellen die gleichen Ziffern wie die entsprechenden Elemente der Befestigungsvorrichtung 100 gemäß der ersten Ausführungsform aufweisen.

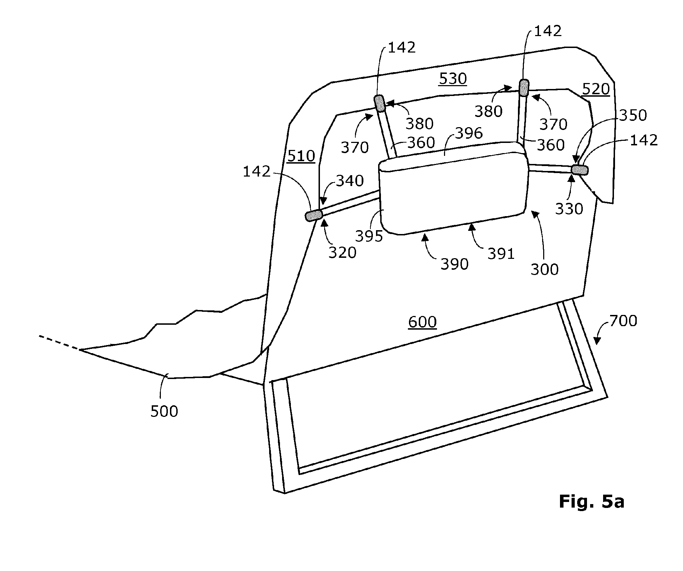

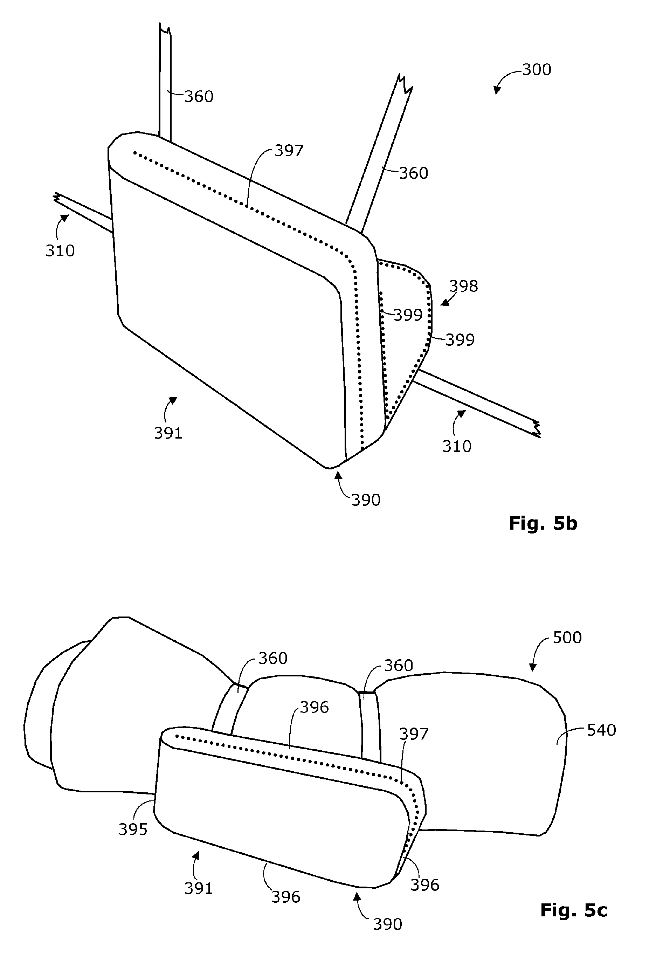

Wie bisher beschrieben, entspricht die in Fig. 4 gezeigte Ausführungsform (Befestigungsvorrichtung 300) in Aufbau und Funktion der in Fig. 1 gezeigten ersten Ausführungsform (Befestigungsvorrichtung 100). Im Gegensatz zu letzterer umfasst die Befestigungsvorrichtung 300 jedoch zusätzlich eine Utensilientasche 390. Die Utensilientasche 390 ist als eine aufklappbare Tasche 391 ausgebildet und ist lösbar an dem Längsband 310 befestigt. Die aufklappbare Tasche 391 umfasst eine Seite 395, entlang derer die Tasche 391 aufklappbar ist (in Fig. 4 die linke Seite der Tasche 391), und drei übrige Seiten 396 (in Fig. 4 die obere, die rechte und die untere Seite der Tasche 391), entlang derer die Tasche 391 mittels eines Längsverschlusses 397 (siehe Figuren 5b und 5c) verschließbar ist. Der Längsverschluss 397 kann als ein an sich bekannter Reißverschluss ausgebildet sein. Wie in Fig. 5a gezeigt, kann die Befestigungsvorrichtung 300 in einer ersten Verwendung vergleichbar wie die Befestigungsvorrichtung 100 wie in Fig. 3 gezeigt, dazu verwendet werden, um Tuchstreifen 510, 520 und 530 eines auf einer Vorder- bzw. Oberseite eines Lehnenelements 600 aufgelegten Tuchs an der Rück- bzw. Unterseite des Lehnenelements 600 zu halten (spannen) und dadurch einen auf der Vorder- bzw. Oberseite des Lehnenelements aufliegenden Teilbereich des Tuchs 500 dort zu fixieren (spannen).

Wie am besten in Fig. 5b zu sehen ist, umfasst die als aufklappbare Tasche 391 ausgebildete Utensilientasche 390 eine Seitentasche 398, die mittels eines, etwa ebenfalls als Reißverschluss ausgebildeten, Längsverschlusses 399 geöffnet und geschlossen werden kann. In der in Fig. 5b gezeigten Anordnung ist die Befestigungsvorrichtung 300 in gleicher Weise eingesetzt wie in Fig. 5a (erste Verwendung). Die Seitentasche 398 ist an einer Außenseite der Tasche 391 (in Fig. 3 an der dem Lehnenelement 600 zugewandten Seite) angeordnet, so dass die Seitentasche 398 vor Blicken im wesentlichen hinter der Tasche 391 verborgen (versteckt) ist und in dieser Verwendung quasi als Geheimfach dient.

Fig. 5c zeigt eine zweite Verwendung der Befestigungsvorrichtung 300, bei der die Vorrichtung 300 zum Zusammenschnüren bzw. Zusammenhalten eines zu einer Rolle zusammengerollten Tuchs 540 dient. Dabei ist das Tuch 500 aus der Fig. 5a zu einer Tuchrolle 540 zusammengerollt. Die Querbänder 360 der Befestigungsvorrichtung 300 sind um die Tuchrolle 540 herum gewickelt, wie in Fig. 5c gezeigt, und mittels der an den freien Enden (in Fig. 5c nicht sichtbar) der Querbänder 360 angeordneten Befestigungselementen 380 an dem Längsband 310 (in Fig. 5c nicht sichtbar) in einem von der Utensilientasche 390 (Tasche 391) verdeckten (in Fig. 5c ebenfalls nicht sichtbaren) Bereich an dem Längsband befestigt und gespannt. Durch die so um die Tuchrolle 540 herum gespannten Querbänder 360 wird das Tuch 500 in seinem aufgerollten Zustand zusammengehalten.

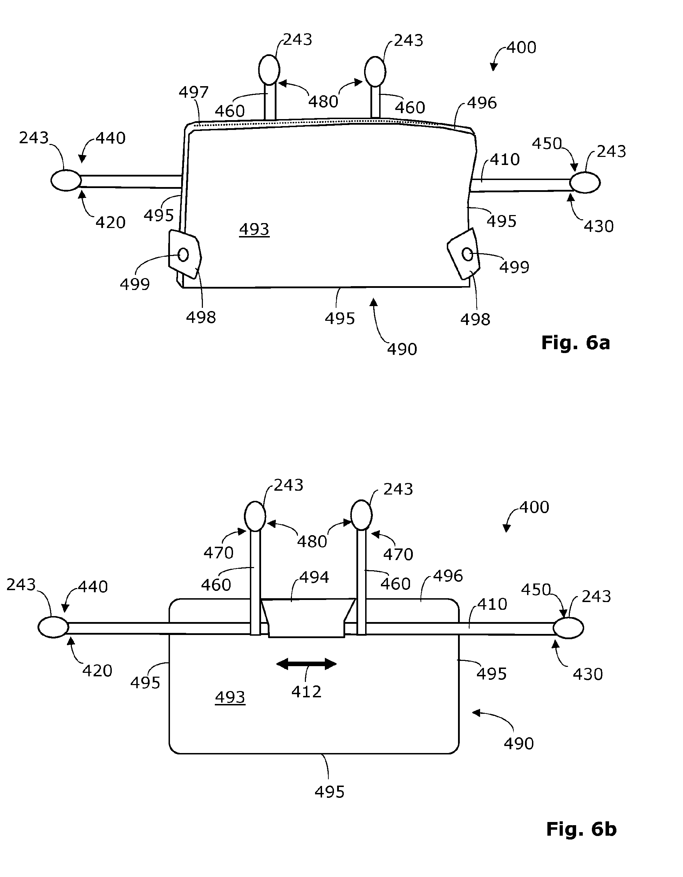

In der in den Figuren 6a 6b und 6c gezeigten, vierten Ausführungsform umfasst eine erfindungsgemäße Befestigungsvorrichtung 400 die gleichen bzw. funktionsgleichen Elemente wie die in Fig. 2 gezeigte Befestigungsvorrichtung 200 gemäß der zweiten Ausführungsform und zusätzlich eine Utensilientasche 490. Die den Elementen der in Fig. 2 gezeigten Ausführungsform (Vorrichtung 200) entsprechenden Elemente der Befestigungsvorrichtung 400 sind mit Bezugszeichen versehen, die an ihrer Hunderterstelle eine "4" (entsprechend der vierten Ausführungsform) und an ihren Zehner- bzw. Einerstellen die gleichen Ziffern wie die entsprechenden Elemente der Befestigungsvorrichtung 200 gemäß der zweiten Ausführungsform aufweisen. So umfasst die Befestigungsvorrichtung 400 ein Längsband 410 mit an dessen beiden Enden 420, 430 angeordneten Befestigungsvorrichtungen 440, 450 und zwei Querbänder 460 mit an deren freien Enden 470 angeordneten Befestigungselementen 480 und den jeweiligen Befestigungselementen 440, 450 und 480 entsprechende Abdeckungen (Sichtabdeckungen), die funktionsgleich zueinander und zu den Abdeckungen 243 der in Fig. 2 gezeigten Vorrichtung 200 ausgebildet sind.

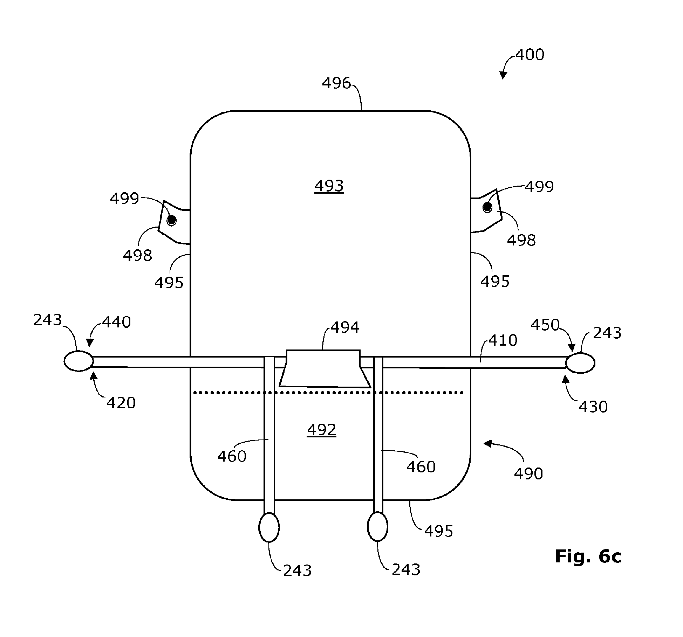

Die Utensilientasche 490 ist als zusammen- und auseinander faltbarer Beutel 493 ausgebildet und ist, wie in den Figuren 6b und 6c gezeigt, mittels einer an einer Außenseite 492 des Beutels 493 befestigten Schlaufe 494 an dem Längsband 410 befestigt (angehängt) und entlang der Erstreckungsrichtung 412 des Längsbands 410 verschiebbar, wie in Fig. 6b angedeutet.

In den Figuren 6a und 6b ist der Beutel 493 in seinem zusammengefalteten Zustand gezeigt. Der Beutel 493 umfasst zwei Laschen 498 mit jeweils einem Druckknopf 499, die dazu dienen, den Beutel 493 in dem zusammengefalteten Zustand zusammenzuhalten, wie in Fig. 6a gezeigt.

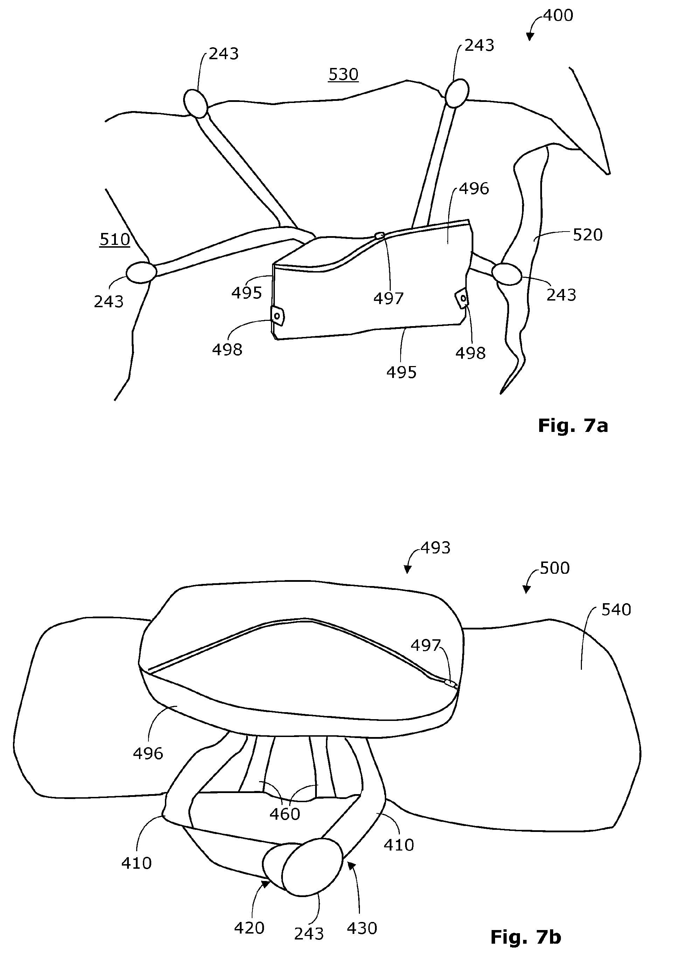

In Fig. 6c ist der Beutel 493 in seinem auseinandergefalteten Zustand gezeigt. In diesem Zustand haben die Laschen 498 keine besondere Funktion. Wie in diesem Zustand jedoch besonders gut erkennbar ist, weist der Beutel 493 drei geschlossene Seiten 495 und eine ausgezeichnete Seite 496 auf, entlang derer der Beutel 493 geöffnet und verschlossen werden kann. Zum Öffnen und Verschließen umfasst der Beutel 493 einen entlang der Seite 496, beispielsweise als Reißverschluss, ausgebildeten Längsverschluss 497 (siehe Fig. 7a und 7b).

Wie in Fig. 6c im Bereich unter den Querbändern 460 zu sehen ist, umfasst der Beutel 493 eine Seitentasche 492, die ähnlich wie die Seitentasche 398 der Befestigungsvorrichtung 300 mit einem, beispielsweise als Reißverschluss ausgebildeten Längsverschluss (in Fig. 6c gepunktet dargestellt und nicht bezeichnet) verschlossen und geöffnet werden kann. Die Seitentasche 492 dient in den in den Figuren 7a und 7b gezeigten Verwendungen als ein vor Blicken im Wesentlichen verborgenes Geheimfach.

Wie in Fig. 7a gezeigt, ist die Befestigungsvorrichtung 400 in vergleichbarer Weise wie die Befestigungsvorrichtungen 100 aus Fig. 1 (siehe Fig. 3) und die Befestigungsvorrichtung 200 aus Fig. 2 (siehe Fig. 5a) dazu verwendbar, ein Tuch an einem Lehnenelement zu befestigen, indem die an den jeweiligen Enden des Längsbands und der Querbänder angebrachten Befestigungselemente an den das Lehnenelement herumgeschlagenen Tuchstreifen 510, 520 und 530 lösbar befestigt werden, wie in Fig. 7a gezeigt.

Die Befestigungsvorrichtung 400 lässt sich ebenfalls zum Zusammenhalten bzw. -schnüren eines zu einer Tuchrolle 540 zusammengerollten Tuchs 500 verwenden, wie in Fig. 7b gezeigt. In der in Fig. 7b gezeigten Verwendung werden die Querbänder 460 (ähnlich wie die Querbänder 360 in Fig. 5c) um die Tuchrolle 540 herumgelegt und deren äußere Enden mittels der dort angebrachten Befestigungselemente an einem Abschnitt des Längsbands 410 lösbar befestigt. Dies ist in Fig. 7b nicht sichtbar. Der besagte Abschnitt des Längsbands 410 ist der in den Figuren 6b und 6c sichtbare Abschnitt, um den die Schlaufe 494 der Utensilientasche 490 (des Beutels 493) herumgeschlagen ist. Das erste und zweite Ende 420 und 430 des Längsbands 410 können dabei zwischen dem Beutel 493 und der Tuchrolle 540 herausgezupft und mittels der dort angebrachten Befestigungselemente (insbesondere der identischen Befestigungselemente 243 wie in Fig. 7b gezeigt) miteinander verbunden werden, so dass eine Trageschlaufe entsteht, in die eine Hand (in Fig. 7b nicht gezeigt) eingreifen kann, um das zusammengerollte Tuch 500 und die Utensilientasche 490 zu tragen.

Bezugszeichenliste:
- 100: Befestigungsvorrichtung (erste Ausführungsform)
- 110: Längsband
- 112: Erstreckungsrichtung
- 120: erstes Ende
- 130: zweites Ende
- 140: erstes Befestigungselement
- 142: Schnappverschlusselement
- 150: zweites Befestigungselement
- 160: Querband
- 162: senkrechte Richtung
- 170: freies Ende
- 180: Befestigungselement
- 200: Befestigungsvorrichtung (zweite Ausführungsform)
- 210: Längsband
- 212: Erstreckungsrichtung
- 220: erstes Ende
- 230: zweites Ende
- 240: erstes Befestigungselement
- 243: Abdeckung
- 250: zweites Befestigungselement
- 260: Querband
- 262: senkrechte Richtung
- 270: freies Ende
- 280: Befestigungselement
- 300: Befestigungsvorrichtung (dritte Ausführungsform)
- 310: Längsband
- 312: Erstreckungsrichtung
- 320: erstes Ende
- 330: zweites Ende
- 340: erstes Befestigungselement
- 350: zweites Befestigungselement
- 360: Querband
- 362: senkrechte Richtung
- 370: freies Ende
- 380: Befestigungselement
- 390: Utensilientasche
- 391: aufklappbare Tasche
- 395: eine Seite
- 396: übrige Seiten
- 397: Längsverschluss für Tasche
- 398: Seitentasche
- 399: Längsverschluss für Seitentasche
- 400: Befestigungsvorrichtung (vierte Ausführungsform)
- 410: Längsband
- 412: Erstreckungsrichtung
- 420: erstes Ende
- 430: zweites Ende
- 440: erstes Befestigungselement
- 450: zweites Befestigungselement
- 460: Querband
- 470: freies Ende
- 480: Befestigungselement
- 490: Utensilientasche
- 492: Seitentasche
- 493: Beutel
- 494: Schlaufe
- 495: übrige Seiten
- 496: eine Seite
- 497: Längsverschluss
- 498: Lasche
- 499: Druckknopf
- 500: Tuch
- 510: erster Tuchstreifen
- 520: zweiter Tuchstreifen
- 530: dritter Tuchstreifen
- 540: zusammengerolltes Tuch
- 600: Lehnenelement
- 700: Gestell

## Patentansprüche

1. Befestigungsvorrichtung (100; 200; 300; 400) mit:
einem elastischen Längsband (110; 210; 310; 410) mit einem ersten Ende (120; 220; 320; 420) und einem zweiten Ende (130; 230; 330; 430),
einem an dem ersten Ende (120; 220; 320; 420) befestigten, ersten Befestigungselement (140; 240; 340; 440), und
einem an dem zweiten Ende (130; 230; 330; 430) befestigten, zweiten Befestigungselement (150; 250; 350; 450), wobei
das erste und das zweite Befestigungselement (140, 150; 240, 250; 340, 350; 440, 450) dazu ausgebildet sind, das erste und das zweite Ende (120, 130; 220, 230; 320, 330; 420, 430) an oder auf einem Tuch (500) lösbar zu befestigen,
**gekennzeichnet durch**
ein, zwei oder mehr elastische Querbänder (160; 260; 360; 460), die an dem Längsband (110; 210; 310; 410) so befestigt sind, dass die Querbänder sich in einem ausgebreiteten Zustand der Befestigungsvorrichtung (100; 200; 300; 400) in einer zu einer Erstreckungsrichtung (112; 212; 312) des Längsbandes (110, 210) im Wesentlichen senkrechten und zueinander im Wesentlichen identischen Richtung (162; 262; 362) erstrecken,
und ein, zwei oder mehr an einem freien Ende (170; 270; 370) eines jeden Querbandes (160; 260; 360) befestigte Befestigungselemente (180; 280; 380), die dazu ausgebildet sind, das freie Ende (170; 270; 370) an oder auf dem Tuch (500) lösbar zu befestigen.

2. Befestigungsvorrichtung nach Anspruch 1, **dadurch gekennzeichnet, dass** das Längsband (110) und jedes Querband (160) aus einem im Wesentlichen identischen, elastischen Bandmaterial hergestellt ist.

3. Befestigungsvorrichtung nach Anspruch 2, **dadurch gekennzeichnet, dass** das Bandmaterial ein Gummiband oder ein textilartiges Band ist.

4. Befestigungsvorrichtung nach einem der Ansprüche 1 bis 3, **dadurch gekennzeichnet, dass** das erste und das zweite Befestigungselement (140, 150; 240, 250; 340, 350; 440, 450) und jedes am freien Ende (170; 270; 370; 470) eines Querbandes (160; 260; 360; 460) vorgesehene Befestigungselement (180; 280; 380; 480) in einer im Wesentlichen identischen Weise an den jeweiligen Enden der Bänder befestigt sind.

5. Befestigungsvorrichtung nach Anspruch 4, **dadurch gekennzeichnet, dass** jedes Befestigungselement (140, 150, 180; 240, 250, 280) am jeweiligen Ende der Bänder angenäht, angenietet, angeklebt oder in einer durch Umschlagen des Endes des Bandes gebildeten Bandöse eingehängt ist.

6. Befestigungsvorrichtung nach einem der Ansprüche 1 bis 5, **dadurch gekennzeichnet, dass** das erste und das zweite Befestigungselement (140, 150) und jedes an einem freien Ende (170) eines Querbandes (160) befestigte Befestigungselement (180) funktionsgleich zueinander ausgebildet sind.

7. Befestigungsvorrichtung nach Anspruch 6, **dadurch gekennzeichnet, dass** jedes Befestigungselement (140, 150, 180; 240, 250, 280; 340, 350, 380; 440, 450, 480) ein oder mehrere Elemente der folgenden Gruppe umfasst: einen Schnappverschluss (182), einen Haken, ein Klettelement mit einer Vielzahl von Haken- und/oder Ösen-Elementen, eine oder mehrere Krallen, oder eine Kombination dieser Elemente.

8. Befestigungsvorrichtung (300; 400) nach einem der Ansprüche 1 bis 7, **gekennzeichnet durch** eine daran lösbar befestigte Utensilientasche (390; 490).

9. Befestigungsvorrichtung (300) nach Anspruch 8, **dadurch gekennzeichnet, dass** die Utensilientasche (390) als Hardcase (392) ausgebildet ist.

10. Befestigungsvorrichtung (400) nach Anspruch 8, **dadurch gekennzeichnet, dass** die Utensilientasche (490) aus einem flexiblen bzw. stoffartigen Material (496) ausgebildet ist.

11. Befestigungsvorrichtung (400) nach Anspruch 10, **dadurch gekennzeichnet, dass** die Utensilientasche (490) als ein im Wesentlichen rechteckförmiger oder quadratförmiger Beutel (493) ausgebildet ist, von dem drei Seiten (495) geschlossen sind und von dem die eine verbleibende Seite (496) mittels eines Längsverschlusses (497), beispielsweise eines Reiß- oder Gleitverschlusses, verschlossen und geöffnet werden kann.

12. Befestigungsvorrichtung (300) nach Anspruch 19, **dadurch gekennzeichnet, dass** die Utensilientasche (390) als eine im Wesentlichen rechteckförmige oder quadratförmige, aufklappbare Tasche (392) ausgebildet ist, die über eine Seite (395) aufklappbar ist und die entlang der drei übrigen Seiten (396) mittels eines Längsverschlusses (397), beispielsweise eines Reiß-oder Gleitverschlusses, verschlossen und geöffnet werden kann.

13. Befestigungsvorrichtung nach einem der Ansprüche 8 bis 12, **dadurch gekennzeichnet, dass** die Utensilientasche eines oder mehrere der folgenden Elemente aufweist: eine an einer Außenseite der Utensilientasche (390) angebrachte Seitentasche (399), eine an einer Innenseite der Utensilientasche angeordnete Innentasche und ein an einer Innenseite der Utensilientasche befestigbares Innenraumunterteilungselement.

14. Befestigungsvorrichtung nach einem der Ansprüche 1 bis 13, **dadurch gekennzeichnet, dass** sie für eine oder mehrere der folgenden Verwendungen ausgebildet ist:
(i) zum Befestigen eines Tuches (500), beispielsweise eines Handtuches, an einem klappbaren Lehnenelement (600) einer Sonnenliege oder eines Liegestuhls (700);
(ii) zum Befestigen an einer rückseitigen Fläche eines Lehnenelements;
(iii) zum Befestigen an einem Rucksack;
(iv) zum Befestigen an einem Hosenbund, wobei das Längsband im Wesentlichen parallel zu dem Hosenbund angeordnet ist;
(v) als Werbematerial; und/oder
(vi) zum Zusammenhalten eines zusammengerollten Tuchs (500, 540).
